# FASCICULE DE BREVET EUROPEEN

(11) **EP 4 118 721 B1**
(45) Date de publication et mention de la délivrance du brevet: **07.01.2026**
(21) Numéro de dépôt: 21711237.4
(22) Date de dépôt: 12.03.2021
(51) Int. Cl.: H02G 3/04, H02G 3/06

(54) **TRONÇON DE CHEMIN DE CÂBLES PRÉSENTANT UNE EXTRÉMITÉ ÉCLISSÉE**
KABELFÜHRUNGSLÄNGE MIT EINEM FISCHPLATTIERTEN ENDE
LENGTH OF CABLE RUN HAVING A FISH-PLATED END

(30) Priorité: 13.03.2020 FR 2002522
(43) Date de publication de la demande: 18.01.2023
(73) Titulaire: Legrand France, 87000 Limoges (FR); Legrand SNC, 87000 Limoges (FR)
(72) Inventeur: ADAM, Damien, 72240 Domfront-en-Champagne (FR)
(74) Mandataire: Santarelli
(86) Numéro de dépôt international: PCT/EP2021/056398
(87) Numéro de publication internationale: WO 2021/180955

(56) Documents cités:
- EP-A1- 2 671 295
- EP-A1- 2 671 295
- WO-A1-2019/077172
- WO-A1-2019/077172
- FR-A1- 3 007 592
- FR-A1- 3 007 592
- FR-A1- 3 040 555
- FR-A1- 3 040 555

## Description

### DOMAINE TECHNIQUE DE L'INVENTION

L'invention a trait au cheminement des câbles dans des chemins de câbles ajourés présentant un fond et des ailes latérales.

### ETAT DE LA TECHNIQUE

On sait que de tels chemins de câbles sont couramment utilisés pour faire courir des câbles électriques ou analogues, par exemple des conduits pneumatiques, le long des parois de certains locaux, en particulier le long d'un mur ou d'un plafond.

En général, ces chemins de câbles sont formés par une pluralité de tronçons de chemin de câbles assemblés bout à bout, chaque tronçon de chemin de câbles étant formé par une tôle perforée pliée ou par un treillis de fils métalliques.

Classiquement, un tronçon de chemin de câbles en treillis de fils métalliques comporte des fils de chaîne longitudinaux soudés à des fils de trame transversaux conformés en U, grâce à quoi ledit tronçon de chemin de câbles présente un fond et deux ailes, ledit tronçon de chemin de câbles se terminant à chaque extrémité par un fil de trame extrême, chaque aile se terminant à son sommet par un fil de chaîne extrême appelé fil de rive.

On sait par ailleurs que pour l'assemblage bout à bout des tronçons de chemin de câbles, on utilise classiquement des accessoires appelés éclisses. Initialement, les éclisses étaient installées manuellement une à une.

Pour faciliter l'assemblage bout-à-bout des tronçons de chemin de câbles en treillis de fils métalliques, on a déjà proposé, notamment par la demande de brevet européen EP 0 973 238, à laquelle correspond le brevet américain US 6,239,364, de conformer différemment les extrémités des tronçons de chemin de câbles : chaque tronçon a une première extrémité rétrécie au niveau de la largeur et de la hauteur alors que sa seconde extrémité n'est pas rétrécie au niveau de la largeur et de la hauteur ; ou alors la première extrémité est rétrécie et la deuxième extrémité est élargie ; ou alors la première extrémité n'est pas rétrécie et la deuxième extrémité est élargie (respectivement au niveau de la largeur et de la hauteur), ce qui fait que la première extrémité d'un tronçon peut être insérée dans la deuxième extrémité d'un autre tronçon transversalement par rapport à la direction d'extension longitudinale des tronçons.

On a également proposé, notamment par la demande de brevet espagnol ES 2 316 256, par la demande de brevet européen EP 2 276 129, par la demande de brevet européen EP 2 733 803 à laquelle correspond la demande de brevet américain US 2014/0151513, par la demande de modèle d'utilité espagnol ES 1 076 189, par la demande de brevet espagnol ES 2 435 736, par la demande de modèle d'utilité espagnol ES 1 078 809, par la demande de brevet français 3 007 590, par la demande de brevet français 3 007 591, par la demande de brevet français 3 007 592 à laquelle correspond la demande de brevet européen EP 2 816 687, par la demande PCT WO 2015/181421 à laquelle correspond la demande américaine US 2017/0271855, par la demande de brevet français 3 040 555 à laquelle correspond la demande de brevet européen EP 3 139 460, par la demande internationale WO 2019/77172 et par la demande internationale WO 2019/77173 ; que chaque tronçon de chemin de câbles présente une extrémité nominale, c'est-à-dire conventionnelle, et une extrémité munie d'un éclissage en fils métalliques configuré pour permettre à cette extrémité de s'assembler par encliquetage avec l'extrémité nominale d'un tronçon de chemin de câbles semblable dans une configuration encliquetée où le tronçon de chemin de câbles et le tronçon de chemin de câbles semblable sont maintenus bout à bout par l'éclissage en fils métalliques.

Dans chacune des solutions susmentionnées, la déformation élastique qui permet l'encliquetage des deux tronçons de chemin de câbles fait intervenir principalement une modification de la position angulaire d'au moins une aile par rapport au fond, au voisinage de l'extrémité éclissée.

On a par ailleurs proposé, notamment par la demande de brevet français 2 971 099, à laquelle correspond la demande de brevet européen EP 2 671 295, une éclisse en fils métalliques prévue pour être pré-montée sur l'une des extrémités d'un tronçon de chemin de câbles en treillis de fils métalliques, qui présente alors, tout comme les tronçons de chemin de câbles susmentionnés, une extrémité munie d'un éclissage en fils métalliques configuré pour permettre à cette extrémité de s'assembler par encliquetage avec l'extrémité nominale d'un tronçon de chemin de câbles semblable dans une configuration encliquetée où le tronçon de chemin de câbles et le tronçon de chemin de câbles semblable sont maintenus bout à bout, mais contrairement aux tronçons de chemin de câbles susmentionnés, la déformation élastique qui permet l'encliquetage des deux tronçons de chemin de câbles fait intervenir principalement une déformation de l'éclissage en fils métalliques (et non une modification de la position angulaire d'au moins une aile par rapport au fond, au voisinage de l'extrémité éclissée), ce qui est plus commode.

Plus précisément, dans la demande de brevet français 2 971 099, à laquelle correspond la demande de brevet européen EP 2 671 295, il est décrit un tronçon de chemin de câbles présentant une extrémité nominale et une extrémité éclissée munie d'un éclissage en fils métalliques configuré pour permettre à ladite extrémité éclissée de s'assembler par encliquetage avec l'extrémité nominale d'un tronçon de chemin de câbles semblable dans une configuration encliquetée où ledit tronçon de chemin de câbles et ledit tronçon de chemin de câbles semblable sont maintenus bout à bout, ledit encliquetage s'opérant par un mouvement de rapprochement mutuel de ladite extrémité éclissée dudit tronçon et de ladite extrémité nominale dudit tronçon semblable suivant une direction transversale audit fond dudit tronçon et audit fond dudit tronçon semblable, avec au cours de ce mouvement de rapprochement ledit éclissage qui se déforme élastiquement au contact dudit tronçon semblable puis se détend pour retenir ledit tronçon semblable.

L'éclissage comporte un fil central en forme générale de U assez proche de la forme des fils de trame sauf qu'il présente un retour à ses extrémités, deux fils d'extrémité en forme générale de guidon de vélo du type cintre route et au moins un fil de fond en forme de cavalier. Chaque fil d'extrémité et chaque fil de fond est disposé transversalement au fil central. Chaque fil d'extrémité se raccorde par son centre à l'une des extrémités du fil central, c'est-à-dire à l'extrémité distale de l'un des tronçons d'aile du fil central. Chaque fil de fond se raccorde par son centre au tronçon de fond du fil central. L'éclissage comporte ainsi une partie de fond formée par le tronçon de fond du fil central et par le ou les fil(s) de fond ; et deux parties latérales chacune formée par l'un des tronçons d'aile du fil central et par le fil d'extrémité qui est raccordé à l'extrémité distale du tronçon d'aile.

Lors de l'encliquetage, les fils de fond forment des butées pour le fond de l'extrémité nominale du tronçon semblable pour s'opposer à la poursuite dudit mouvement de rapprochement mutuel lorsque ledit tronçon semblable arrive à la position visée où il est bout à bout avec ledit tronçon.

Pour chaque partie latérale, le fil central forme un bras flexible ayant une extrémité proximale assemblée audit tronçon et ayant une extrémité distale raccordée au centre du fil d'extrémité en forme de guidon de vélo du type cintre route, qui forme une tête. Dans cette tête, chaque tronçon distal forme une rampe et la partie centrale forme un cavalier dont chaque extrémité est raccordée à l'une des rampes. En l'absence de sollicitation, chaque partie latérale a une configuration où le cavalier est sous le fil de rive dans une position propre à retenir l'un à l'autre le fil de trame extrême de l'extrémité éclissée dudit tronçon et le fil de trame extrême de l'extrémité nominale dudit tronçon semblable.

Ladite tête et ledit bras flexible sont configurés pour qu'au cours dudit mouvement de rapprochement le fil de rive de l'extrémité nominale dudit tronçon semblable rencontre la rampe correspondante et l'entraîne à écarter le cavalier de sa position sous le fil de rive par déformation dudit bras flexible, jusqu'à ce que le fil de rive de l'extrémité nominale dudit tronçon semblable ait franchi ladite rampe, le bras flexible se détendant alors en ramenant le cavalier à sa position sous le fil de rive.

En position encliquetée, le fil central est logé entre le fil de trame extrême de l'extrémité éclissée dudit tronçon et le fil de trame extrême de l'extrémité nominale dudit tronçon semblable et permet d'assurer un écartement prédéterminé entre ces deux fils de trame extrêmes.

### EXPOSE DE L'INVENTION

L'invention vise à fournir un tronçon de chemin de câbles en treillis de fils métalliques présentant une extrémité nominale et une extrémité éclissée munie d'un éclissage en fils métalliques présentant des performances améliorées vis-à-vis du tel tronçon décrit par la demande de brevet français 2 971 099, à laquelle correspond la demande de brevet européen EP 2 671 295, tout en étant du même genre, c'est-à-dire configuré pour permettre à ladite extrémité éclissée de s'assembler par encliquetage avec l'extrémité nominale d'un tronçon de chemin de câbles semblable dans une configuration encliquetée où ledit tronçon de chemin de câbles et ledit tronçon de chemin de câbles semblable sont maintenus bout à bout, ledit encliquetage s'opérant par un mouvement de rapprochement mutuel de ladite extrémité éclissée dudit tronçon et de ladite extrémité nominale dudit tronçon semblable suivant une direction transversale audit fond dudit tronçon et audit fond dudit tronçon semblable, avec au cours de ce mouvement de rapprochement ledit éclissage qui se déforme élastiquement au contact dudit tronçon semblable puis se détend pour retenir ledit tronçon semblable.

En particulier, il est visé de meilleures performances sur la mise en œuvre de l'opération d'encliquetage et sur la tenue de l'assemblage après encliquetage, alors que l'opérateur intervient uniquement pour mettre en œuvre le mouvement de rapprochement mutuel susmentionné.

L'invention propose à cet effet, sous un premier aspect, un tronçon de chemin de câbles en treillis de fils métalliques, comportant des fils de chaîne longitudinaux soudés à des fils de trame transversaux conformés en U, grâce à quoi ledit tronçon de chemin de câbles présente un fond et deux ailes, ledit tronçon de chemin de câbles se terminant à chaque extrémité par un fil de trame extrême, chaque aile se terminant à son sommet par un fil de chaîne extrême appelé fil de rive ; ledit tronçon de chemin de câbles présentant une extrémité nominale et une extrémité éclissée munie d'un éclissage en fils métalliques configuré pour permettre à ladite extrémité éclissée de s'assembler par encliquetage avec l'extrémité nominale d'un tronçon de chemin de câbles semblable dans une configuration encliquetée où ledit tronçon de chemin de câbles et ledit tronçon de chemin de câbles semblable sont maintenus bout à bout, ledit encliquetage s'opérant par un mouvement de rapprochement mutuel de ladite extrémité éclissée dudit tronçon et de ladite extrémité nominale dudit tronçon semblable suivant une direction transversale audit fond dudit tronçon et audit fond dudit tronçon semblable, avec au cours de ce mouvement de rapprochement ledit éclissage qui se déforme élastiquement au contact dudit tronçon semblable puis se détend pour retenir ledit tronçon semblable ; ledit éclissage comportant une partie de fond et deux parties latérales ; ladite partie de fond comportant des organes de butée configurés pour coopérer avec le fond de l'extrémité nominale dudit tronçon semblable pour s'opposer à la poursuite dudit mouvement de rapprochement dudit tronçon semblable lorsque ce dernier est bout à bout avec ledit tronçon ; chaque dite partie latérale comportant une tête et un bras flexible ayant une extrémité distale raccordée à la tête et ayant une extrémité proximale assemblée audit tronçon, ladite tête comportant une rampe et un cavalier raccordé à la rampe ; chaque dite partie latérale prenant en l'absence de sollicitation une configuration où le cavalier est sous le fil de rive dans une position propre à retenir l'un à l'autre le fil de trame extrême de l'extrémité éclissée dudit tronçon et le fil de trame extrême de l'extrémité nominale dudit tronçon semblable ; ladite tête et ledit bras flexible étant configurés pour qu'au cours dudit mouvement de rapprochement le fil de rive de l'extrémité nominale dudit tronçon semblable rencontre la rampe et l'entraîne à écarter le cavalier de sa position sous le fil de rive par déformation dudit bras flexible, jusqu'à ce que le fil de rive de l'extrémité nominale dudit tronçon semblable ait franchi ladite rampe, le bras flexible se détendant alors en ramenant le cavalier à sa position sous le fil de rive ;
caractérisé en ce que ladite tête est raccordée audit bras flexible par l'une de ses extrémités ; et chaque dite partie latérale comporte en outre de ladite tête et dudit bras flexible, une entretoise assujettie audit fil de trame extrême de ladite extrémité éclissée dudit tronçon, ladite entretoise étant située, dans ladite configuration encliquetée, entre ledit fil de trame extrême de l'extrémité éclissée dudit tronçon et ledit fil de trame extrême de l'extrémité nominale dudit tronçon semblable.

Ainsi, alors que dans les parties latérales de l'éclissage décrit par la demande de brevet français 2 971 099, à laquelle correspond la demande de brevet européen EP 2 671 295, c'est par son centre que la tête est raccordée au bras flexible, dans l'éclissage que comporte le tronçon selon l'invention c'est par l'une de ses extrémités que la tête est raccordée au bras flexible.

L'invention est basée sur l'observation qu'avec cette modification de l'agencement des parties latérales de l'éclissage, il est possible d'assurer un écartement prédéterminé entre les deux fils de trame extrêmes (celui de l'extrémité éclissée dudit tronçon et celui de l'extrémité nominale dudit tronçon semblable) par une entretoise distincte du bras flexible, assujettie au fil de trame extrême de ladite extrémité éclissée dudit tronçon.

Il est ainsi possible d'améliorer tout à la fois la liberté de mouvement du bras flexible et la qualité du maintien d'écartement entre les deux fils de trame extrêmes.

L'amélioration de la liberté de mouvement du bras flexible rend l'encliquetage plus commode et plus sûr.

L'amélioration de la qualité du maintien d'écartement entre les deux fils de trame extrêmes est favorable à la tenue de l'assemblage après encliquetage. En effet, à l'usage, lorsque le chemin de câble est chargé alors qu'il est soutenu par des organes de fixation ou de supportage situés en général à distance des extrémités des tronçons composant le chemin de câble, la jonction entre deux tronçons a tendance à s'écarter au niveau du fond et à se rapprocher au niveau du sommet des ailes. Le maintien de l'écartement, notamment par la bonne capacité de reprise d'efforts qu'offre l'entretoise des parties latérales, permet d'éviter que sous l'effet des efforts les fils de trame extrêmes se déplacent, et donc d'éviter qu'ils se libèrent des parties latérales de l'éclissage.

On obtient ainsi une tenue de l'assemblage après encliquetage qui est particulièrement robuste.

Selon des caractéristiques favorables aux performances du tronçon de chemin de câbles selon l'invention :
- ladite extrémité de ladite tête par laquelle ladite tête se raccorde audit bras flexible est située entre le fil de trame extrême de ladite extrémité éclissée dudit tronçon et le fil de trame qui le précède ;
- dans ladite configuration encliquetée, ladite extrémité de ladite tête par laquelle ladite tête se raccorde audit bras flexible est située entre le fil de trame extrême de ladite extrémité nominale dudit tronçon semblable et le fil de trame qui le précède ;
- ladite extrémité proximale dudit bras flexible est fixée à l'aile dudit tronçon avec laquelle coopère ladite tête ;
- ledit bras flexible s'étend longitudinalement entre deux fils de chaîne de ladite aile dudit tronçon ;
- ladite extrémité proximale dudit bras flexible est fixée au fond dudit tronçon ;
- ladite extrémité proximale dudit bras flexible se raccorde à l'un desdits organes de butée ;
- ladite extrémité distale dudit bras flexible se raccorde à ladite rampe ;
- ladite entretoise présente au moins deux branches s'étendant chacune transversalement au plan de l'aile dudit tronçon avec laquelle coopère ladite tête ;
- chaque partie latérale est formée par un unique fil métallique ;
- ladite partie latérale comporte une base en U présentant un fond et deux bras s'étendant chacun depuis une extrémité respective dudit fond, l'un desdits bras formant ledit bras flexible, l'autre desdits bras se raccordant à ladite entretoise ;
- ladite base en U est contre le côté desdits fils de trame qui regarde vers l'extérieur dudit tronçon ; et/ou
- ladite tête et ledit bras flexible sont formés par un premier desdits fils métalliques et ladite entretoise est formée par un deuxième desdits fils métalliques distinct dudit premier fil métallique.

L'invention a aussi pour objet, sous un deuxième aspect, un ensemble comportant un tronçon de chemin de câbles tel qu'exposé ci-dessus et un tronçon de chemin de câbles semblable.

### BREVE DESCRIPTION DES DESSINS

On va maintenant poursuivre l'exposé de l'invention par la description d'exemples de réalisation, donnée ci-après à titre illustratif et non limitatif, en référence aux dessins annexés.
[Fig 1] La figure 1 illustre en perspective un tronçon de chemin de câbles selon l'invention, dont l'une des extrémités est nominale (conventionnelle) et l'autre est munie d'un éclissage en fils métalliques.
[Fig 2] La figure 2 montre le tronçon de chemin de câbles illustré sur la figure 1 et un tronçon de chemin de câbles semblable assemblés bout-à-bout par encliquetage, les tronçons étant partiellement visibles.
[Fig 3] La figure 3 est une vue en élévation de côté de l'extrémité éclissée et de l'extrémité nominale illustrées à la figure 2, prise depuis la gauche.
[Fig 4] La figure 4 est une vue en élévation de face du tronçon illustré à la figure 1 en cours d'assemblage avec un tronçon semblable, le tronçon semblable étant vu suivant une coupe transversale prise à mi-chemin entre le fil de trame terminant son extrémité nominale et le fil de trame qui le précède, des parties latérales de l'éclissage étant dans une configuration initiale qu'elles adoptent en l'absence de sollicitation.
[Fig 5] La figure 5 est une vue semblable à la figure 4, le tronçon et le tronçon semblable ayant été rapprochés l'un de l'autre suivant une direction transversale à leurs fonds, le tronçon semblable étant vu suivant une coupe transversale prise au ras du fil de trame terminant son extrémité nominale, l'extrémité nominale du tronçon semblable sollicitant les parties latérales à se déformer élastiquement pour réaliser l'encliquetage.
[Fig 6] La figure 6 est une vue de dessus de l'extrémité éclissée et de l'extrémité nominale, prise dans la région située à gauche sur la figure 5.
[Fig 7] La figure 7 est une vue en agrandissement de la portion de l'extrémité éclissée située à gauche sur la figure 1.
[Fig 8] La figure 8 est une vue en élévation de face de la portion de l'extrémité éclissée située à gauche sur la figure 1.
[Fig 9] La figure 9 est une vue similaire à la figure 7 mais pour une variante du tronçon de chemin de câbles.
[Fig 10] La figure 10 est une vue en agrandissement de la portion de l'extrémité éclissée située à droite sur la figure 1, mais pour la variante du tronçon de chemin de câbles illustré sur la figure 9.
[Fig 11] La figure 11 est une vue semblable à la figure 1, mais pour une autre variante du tronçon de chemin de câbles.
[Fig 12] La figure 12 est une vue semblable à la figure 2, mais pour encore une autre variante du tronçon de chemin de câbles.
[Fig 13] La figure 13 est une vue semblable à la figure 1, mais pour une variante du tronçon de chemin de câbles présentant des fils de rive rectilignes plutôt qu'avec des portions en renfoncement au niveau de chaque fil trame.

### DESCRIPTION DETAILLEE

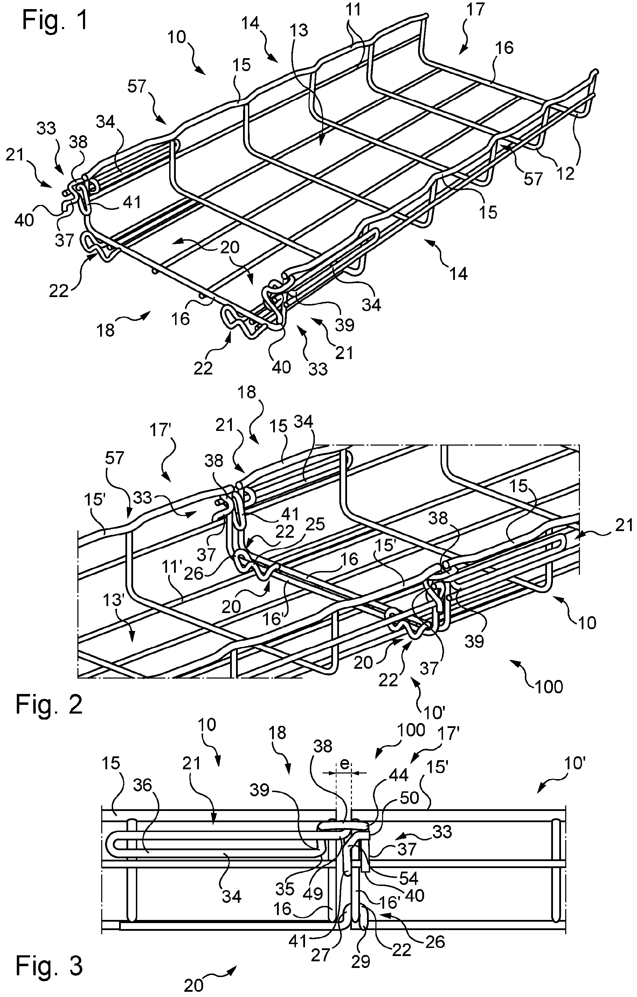

Le tronçon de chemin de câbles 10 illustré sur la figure 1 est en treillis de fils métalliques, à savoir des fils de chaîne 11 s'étendant longitudinalement et des fils de trame 12 s'étendant transversalement, conformés en U, avec une soudure à chaque intersection entre un fil de chaîne 11 et un fil de trame 12.

Le tronçon de chemin de câbles 10 présente ainsi un fond 13 et deux ailes 14.

Chaque aile 14 se termine à son sommet par un fil de chaîne 11 extrême appelé fil de rive 15.

Le fil de rive 15 est ici contre la tranche de chacun des fils de trame 12.

Au voisinage de chaque fil de trame 12, le fil de rive 15 présente une portion 57 en renfoncement vers l'intérieur du tronçon 10.

À l'exception des fils de rive 15, les fils de chaîne 11 sont ici contre le côté externe des fils de trame 12, c'est-à-dire le côté qui regarde vers l'extérieur du tronçon 10.

Le tronçon de chemin de câbles 10 se termine à chaque extrémité par un fil de trame 12 extrême appelé fil de trame d'extrémité 16.

Le tronçon de chemin de câbles 10 présente une extrémité nominale 17 et une extrémité éclissée 18 munie d'un éclissage en fils métalliques configuré pour permettre à l'extrémité éclissée 18 de s'assembler par encliquetage avec l'extrémité nominale d'un tronçon de chemin de câbles semblable.

Les fils métalliques formant l'éclissage sont chacun conformé par pliage et soudé sur le tronçon de chemin de câbles 10.

Les figures 2 et 3 montrent le tronçon de chemin de câbles 10 mis bout à bout avec un tronçon de chemin de câbles 10' semblable.

Par la suite, on emploie les mêmes références numériques pour les éléments semblables des tronçons 10 et 10' mais suivies d'un « ' » lorsqu'il s'agit d'un élément du tronçon semblable 10'.

L'extrémité éclissée 18 du tronçon 10 est assemblée par encliquetage avec l'extrémité nominale 17' du tronçon semblable 10'.

Les tronçons 10 et 10' se trouvent ainsi dans une configuration encliquetée dans laquelle ils sont maintenus bout à bout.

Comme on le voit bien à la figure 3, l'éclissage est configuré pour que dans cette configuration encliquetée, il soit prévu un écart prédéterminé e entre le fil de trame d'extrémité 16 du tronçon 10 et le fil de trame d'extrémité 16' du tronçon 10'.

Cet écart permet que l'espace entre le fil de trame d'extrémité 16 du tronçon 10 et le fil de trame d'extrémité 16' du tronçon semblable 10' soit suffisant pour accueillir les éventuelles portions de fil de chaîne 11 ou 11' qui dépasseraient au-delà du fil de trame d'extrémité 16 ou 16' respectivement, compte tenu des tolérances de fabrication propres aux tronçons de chemin de câbles en fils métalliques.

La valeur de cet écart est ici d'environ 6,6 mm.

En variante, cette valeur est comprise entre 4,5 mm et 10,0 mm.

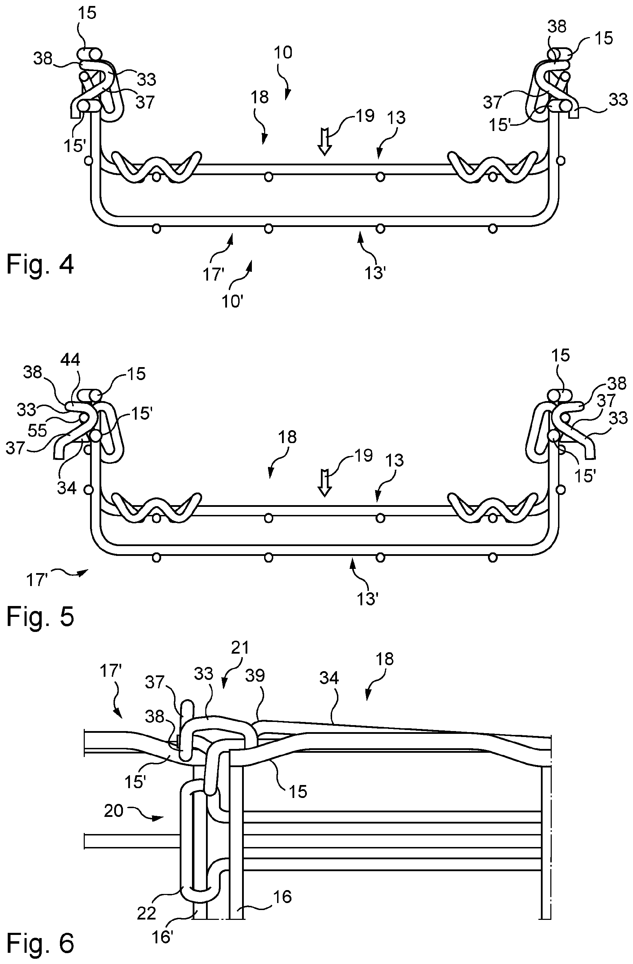

Comme il sera expliqué plus en détails ultérieurement en référence aux figures 4 à 6, l'encliquetage s'opère par un mouvement de rapprochement mutuel de l'extrémité éclissée 18 du tronçon 10 et de l'extrémité nominale 17' du tronçon semblable 10' suivant une direction 19 transversale au fond 13 du tronçon 10 et au fond 13' du tronçon semblable 10', avec au cours de ce mouvement de rapprochement l'éclissage qui se déforme élastiquement au contact du tronçon semblable 10' puis se détend pour retenir le tronçon semblable 10'.

Plusieurs tronçons de chemin de câbles tels que les tronçons 10 et 10' peuvent ainsi être assemblés bout à bout pour construire un chemin de câbles 100 (figures 2 et 3).

Ici, le chemin de câbles 100 est prévu pour courir le long d'un plafond ou d'une autre structure présentant une surface en surplomb de l'espace où doit se trouver le chemin de câbles 100.

Le long du plafond ou autre structure, le fond 13, 13' est prévu pour être orienté horizontalement, avec les ailes 14, 14' qui sont tournées vers le haut, y compris lorsque le plafond ou autre structure est incliné.

La fixation du chemin de câbles 100 à la structure telle qu'un plafond peut être effectuée par exemple à l'aide de consoles, qui ici ne sont pas représentées.

Comme on le voit sur les figures 1 et 2, l'éclissage comporte une partie de fond 20 située sur le fond 13 du tronçon 10, et deux parties latérales 21 situées chacune sur une aile 14 respective.

La partie de fond 20 comporte ici deux organes de butée 22 disposés chacun au pied d'une aile 14 respective.

Comme on le voit sur les figures 2 et 3, chaque organe de butée 22 est ici configuré pour coopérer avec le fond 13' de l'extrémité nominale 17' du tronçon semblable 10' pour s'opposer à la poursuite du mouvement de rapprochement par lequel s'opère l'encliquetage du tronçon 10 avec le tronçon semblable 10', lorsque ce dernier est bout à bout avec le tronçon 10.

Chaque organe de butée 22 est en outre ici configuré pour retenir au tronçon 10 le fil de trame d'extrémité 16' du tronçon semblable 10'.

Chaque partie latérale 21 comporte une tête 33 et un bras flexible 34 ayant une extrémité distale 35 raccordée à la tête 33 et ayant une extrémité proximale 36 assemblée au tronçon 10 (figure 3), ici en y étant fixée.

La tête 33 s'étend depuis une extrémité arrière 39 située du côté du fil de trame d'extrémité 16 qui regarde suivant la direction longitudinale vers l'extrémité nominale 17, jusqu'à une extrémité avant 40, opposée à l'extrémité arrière 39, située du côté du fil de trame d'extrémité 16 qui regarde suivant la direction longitudinale à l'opposé de l'extrémité nominale 17.

En outre, lorsque les tronçons 10 et 10' sont en configuration encliquetée, l'extrémité avant 40 est située du côté du fil de trame d'extrémité 16' qui regarde suivant la direction longitudinale vers l'extrémité nominale 17' du tronçon semblable 10'.

Ici, l'extrémité arrière 39 est celle par laquelle la tête 33 se raccorde au bras flexible 34, et l'extrémité avant 40 est formée par une des extrémités libres de l'unique fil métallique formant ici la partie latérale 21.

La tête 33 comporte une rampe 37 et un cavalier 38 raccordé à la rampe 37.

Comme on le voit sur les figures 1 à 3, chaque partie latérale 21 prend en l'absence de sollicitation une configuration où le cavalier 38 est sous le fil de rive 15 dans une position propre à retenir l'un à l'autre le fil de trame d'extrémité 16 de l'extrémité éclissée 18 du tronçon 10 et le fil de trame d'extrémité 16' de l'extrémité nominale 17' du tronçon semblable 10'.

On notera que lorsque les tronçons 10 et 10' sont en configuration encliquetée (figures 2 et 3), le cavalier 38 est en outre sous le fil de rive 15' de l'extrémité nominale 17' du tronçon semblable 10', puisque les fils de rive 15 et 15' sont au même niveau.

Chaque partie latérale 21 comporte, en outre de la tête 33 et du bras flexible 34, une entretoise 41 assujettie au fil de trame d'extrémité 16 de l'extrémité éclissée 18 du tronçon 10.

L'entretoise 41 est située par rapport à la tête 33 de sorte que, suivant la direction longitudinale, le cavalier 38 s'étende de part et d'autre de l'entretoise 41, et de sorte que la rampe 37 se situe du côté de l'entretoise 41 qui regarde à l'opposé du fil de trame d'extrémité 16'.

Lorsque les tronçons 10 et 10' sont en configuration encliquetée, l'entretoise 41 se situe entre le fil de trame d'extrémité 16 de l'extrémité éclissée 18 du tronçon 10 et le fil de trame d'extrémité 16' de l'extrémité nominale 17' du tronçon semblable 10' ; l'entretoise 41 étant plus précisément contre le fil de trame d'extrémité 16' de l'extrémité nominale 17'.

L'assemblage par encliquetage de l'extrémité éclissée 18 du tronçon 10 avec l'extrémité nominale 17' du tronçon semblable 10' va maintenant être décrit à l'appui des figures 4 à 6.

Le tronçon 10 et le tronçon semblable 10' sont orientés suivant la même direction et disposés de sorte que l'extrémité nominale 17' du tronçon 10' est tournée vers l'extrémité éclissée 18 du tronçon 10, avec un écart entre le tronçon 10 et le tronçon 10' suivant la direction 19.

Le tronçon 10' est positionné en butée contre l'entretoise 41, sous la rampe 37 et centré entre les extrémités avant 40 respectives des parties latérales 21.

L'extrémité éclissée 18 et l'extrémité nominale 17' sont alors rapprochées l'une de l'autre suivant la direction 19.

La tête 33 et le bras flexible 34 sont configurés pour qu'au cours de ce mouvement de rapprochement le fil de rive 15' de l'extrémité nominale 17' du tronçon semblable 10' rencontre la rampe 37 et l'entraîne à écarter le cavalier 38 de sa position sous le fil de rive 15 par déformation élastique du bras flexible 34 (figures 5 et 6), jusqu'à ce que le fil de rive 15' de l'extrémité nominale 17' du tronçon semblable 10' ait franchi la rampe 37, le bras flexible 34 se détendant alors en ramenant le cavalier 38 à sa position sous le fil de rive 15 (figures 2 et 3).

L'extrémité éclissée 18 du tronçon 10 et l'extrémité nominale 17' du tronçon semblable 10' sont alors assemblées.

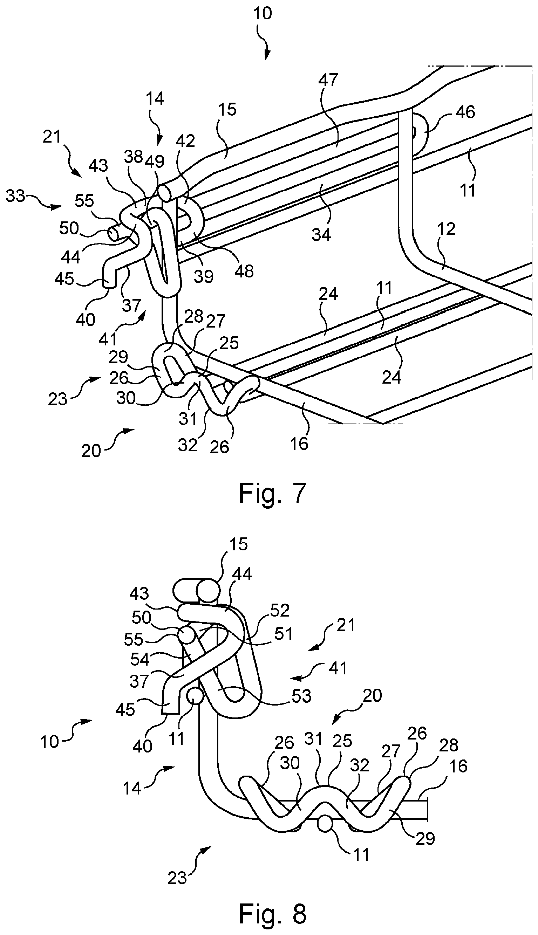

On va maintenant décrire plus en détails la partie de fond 20 et les parties latérales 21 de l'éclissage, en faisant en outre référence aux figures 7 et 8.

On notera que sur les figures 1 à 4, 7 et 8, les parties latérales 21 sont dans une configuration qu'elles adoptent en l'absence de sollicitation.

Les organes de butée 22 de la partie de fond 20 sont ici chacun formé par un unique fil métallique et sont ici identiques.

Chaque organe de butée 22 comporte un arceau 23 et deux branches latérales 24 rectilignes s'étendant chacune depuis une extrémité respective de l'arceau 23.

Les branches latérales 24 sont chacune soudée à la fois au fil de trame d'extrémité 16 et au fil de trame 12 qui le précède. Les branches latérales 24 sont ici situées du côté du fond 13 qui regarde vers l'extérieur du tronçon 10.

Les branches latérales 24 s'étendent ici parallèlement l'une à l'autre et sont disposées de part et d'autre d'un fil de chaîne 11.

L'arceau 23 comporte une arche centrale 25 et deux cornes 26 s'étendant chacune d'une extrémité respective de l'arche 25 à une extrémité d'une branche latérale 24 rectiligne respective.

Chaque corne 26 présente, depuis la branche latérale 24 jusqu'à l'arche 25, une branche arrière 27, un fond 28 et une branche avant 29 qui sont agencés en forme d'épingle à cheveux.

La corne 26 et la branche latérale 24 qui s'étendent depuis l'une des extrémités de l'arche 25 sont agencées en image miroir de la corne 26 et de la branche latérale 24 qui s'étendent depuis l'autre des extrémités de l'arche 25.

Les cornes 26 sont orientées selon des directions respectives qui divergent. En particulier, celle des cornes 26 qui est la plus proche de l'aile 14 au pied de laquelle l'organe de butée 22 se trouve, est ici inclinée vers le haut et vers cette aile 14, et l'autre corne 26 de l'organe de butée 22 est inclinée vers le haut et vers l'autre aile 14.

L'arche 25 présente, depuis la corne 26 la plus proche de l'aile jusqu'à l'autre corne 26, une première branche 30, un fond 31 et une deuxième branche 32 qui sont agencés en V.

Comme on le voit sur les figures 2 et 3, pour chaque corne 26, l'espace situé entre sa branche arrière 27 et sa branche avant 29 est configuré pour recevoir le fil de trame d'extrémité 16' du tronçon de chemin de câbles semblable 10', tandis que l'espace situé entre la première branche 30 et la deuxième branche 32 de l'arche 25 est configuré pour recevoir un fil de chaîne 11' du tronçon de chemin de câbles semblable 10'.

En configuration encliquetée des tronçons 10 et 10', le tronçon 10' est ainsi maintenu au niveau de son fond 13' suivant la direction longitudinale dans les deux sens, puisque le fil de trame d'extrémité 16' vient respectivement en butée contre la branche arrière 27 et la branche avant 29 de chacune des cornes 26 ; et suivant la direction 19 transversale au fond 13, 13' vers le haut, puisque le fil de trame d'extrémité 16' vient en butée contre le fond 31 de chacune des cornes 26 et que le fil de chaîne 11' reçu entre les branches 30 et 32 vient en butée contre le fond 31 de l'arche 25.

Chaque partie latérale 21 est ici formée par un unique fil métallique et est ici agencée en image miroir de l'autre partie latérale 21.

Par conséquent, la description d'une partie latérale 21 s'applique *mutatis mutandis* à l'autre partie latérale 21.

La partie latérale 21 présente une forme généralement allongée orientée suivant la direction longitudinale.

La partie latérale 21 comporte une base en U présentant un fond 46 et deux bras s'étendant chacun depuis une extrémité respective du fond 46, à savoir un bras supérieur 47 qui se raccorde à l'entretoise 41 et un bras inférieur qui se raccorde à la tête 33 par son extrémité arrière 39 et forme le bras flexible 34.

La base en U est ici située entre le fil de rive 15 et le fil de chaîne 11 qui le précède, et est contre le côté externe du fil de trame d'extrémité 16 et du fil de trame 12 qui le précède, c'est-à-dire le côté qui regarde vers l'extérieur du tronçon de chemin de câbles 10.

Le fond 46 est ici incurvé. Le bras supérieur 47 et le bras inférieur 34 sont ici rectilignes, orientés suivant la direction longitudinale et parallèles entre eux.

Le bras supérieur 47 est situé entre le bras inférieur 34 et le fil de rive 15.

La partie latérale 21 est soudée au tronçon de chemin de câbles 10 par les emplacements où le bras supérieur 47 est contre le fil de trame d'extrémité 16 et le fil de trame 12 qui le précède, ainsi qu'à l'emplacement où le bras inférieur 34 est contre ce fil de trame 12.

Le bras inférieur 34 n'étant pas soudé au fil de trame d'extrémité 16, il peut être élastiquement déformé pour déplacer la tête 33 vers l'extérieur, notamment au cours de l'assemblage des tronçons 10 et 10' par encliquetage comme expliqué précédemment.

Le cavalier 38 est situé entre le bras supérieur 47 et le fil de rive 15.

Le cavalier 38 a une forme en U et présente un fond 43 et deux branches s'étendant depuis une extrémité respective du fond 43, à savoir une branche arrière 42 et une branche avant 44.

Le fond 43 est généralement orienté suivant une direction parallèle à l'aile 14, ici suivant la direction longitudinale.

La branche arrière 42 et la branche avant 44 s'étendent chacune suivant une direction transversale à l'aile 14 et vers l'intérieur du tronçon 10, ici parallèlement l'une à l'autre.

Le fond 43 est situé du côté du fil de trame d'extrémité 16 qui regarde vers l'extérieur du tronçon 10 et est contre ce fil de trame d'extrémité 16.

La branche arrière 42 est située du côté du fil de trame d'extrémité 16 qui regarde suivant la direction longitudinale vers l'extrémité nominale 17 du tronçon 10 et est à proximité immédiate, voire au contact, de ce fil de trame d'extrémité 16.

La branche arrière 42 est en outre située du côté du fil de rive 15 qui regarde vers le fond 13 et est contre ce fil de rive 15.

La branche avant 44 est située du côté du fil de trame d'extrémité 16 qui regarde suivant la direction longitudinale à l'opposé de l'extrémité nominale 17 du tronçon 10.

La branche avant 44 est en outre située du côté de l'entretoise 41 qui regarde suivant la direction longitudinale à l'opposé de l'extrémité nominale 17 du tronçon 10.

En outre, lorsque les tronçons 10 et 10' sont en configuration encliquetée, la branche avant 44 est située du côté du fil de trame d'extrémité 16' qui regarde suivant la direction longitudinale vers l'extrémité nominale 17' du tronçon semblable 10' et est à proximité immédiate, voire au contact, de ce fil de trame d'extrémité 16'.

Dans cette configuration encliquetée, la branche avant 44 est en outre située du côté du fil de rive 15' qui regarde vers le fond 13' et est contre ce fil de rive 15'.

En configuration encliquetée des tronçons 10 et 10', le tronçon 10' est ainsi maintenu au niveau de chacune de ses ailes 14' suivant la direction longitudinale dans les deux sens, puisque le fil de trame d'extrémité 16' vient respectivement en butée contre l'entretoise 41 et la branche avant 44 ; suivant la direction transversale à l'aile 14' vers l'extérieur, puisque le fil de trame d'extrémité 16' vient en butée contre le fond 43 ; et suivant la direction 19 transversale au fond 13 vers le bas, puisque le fil de rive 15' vient en butée contre la branche avant 44.

On notera que les efforts exercés suivant la direction longitudinale par le fil de trame d'extrémité 16' du tronçon semblable 10' sur la tête 33 sont transmis au tronçon 10 notamment par la branche arrière 42 de la tête 33 qui vient contre le fil de trame d'extrémité 16.

La rampe 37 s'étend entre une extrémité supérieure se raccordant à la branche avant 44 du cavalier 38 et une extrémité inférieure se raccordant à l'extrémité avant 40 de la tête 33.

La rampe 37 est sensiblement rectiligne et s'étend transversalement au plan de l'aile 14 en étant orientée suivant une direction qui est ici inclinée vers l'intérieur du tronçon 10 et vers le haut.

Comme on le voit sur les figures 5 et 6, cette orientation de la rampe 37 fait que la tête 33 se déplace vers l'extérieur du tronçon 10 au cours de l'assemblage des tronçons 10 et 10'.

La branche avant 44 et la rampe 37 sont agencées selon une forme en V dont la pointe est ici dirigée du côté où se trouve l'autre aile 14. La branche avant 44 et la rampe 37 sont situées au même niveau suivant la direction longitudinale.

Comme on le voit à la figure 3, la partie latérale 21 est configurée de sorte qu'en configuration encliquetée le fil de trame d'extrémité 16' puisse venir non seulement en butée contre la branche avant 44 mais aussi contre la rampe 37, cette dernière participant donc elle aussi au maintien du fil de trame d'extrémité 16' suivant la direction longitudinale.

La tête 33 comporte, en outre de la rampe 37 et du cavalier 38, une branche de jonction 48 qui s'étend entre une extrémité supérieure se raccordant à la branche arrière 42 du cavalier 38 et une extrémité inférieure se raccordant à l'extrémité arrière 39 de la tête 33.

La branche de jonction 48 est sensiblement rectiligne et s'étend transversalement au plan de l'aile 14 en étant orientée suivant une direction qui est ici inclinée vers le haut et vers l'intérieur du tronçon 10.

La branche arrière 42 et la branche de jonction 48 sont agencées selon une forme en V dont la pointe est ici dirigée vers l'intérieur du tronçon 10.

On notera que l'espace entre la branche arrière 42 et la branche de jonction 48 est configuré pour accueillir le bras supérieur 47 de la base en U lorsque la tête 33 se déplace vers l'extérieur au cours de l'assemblage des tronçons 10 et 10'.

Comme on le voit à la figure 3, la branche de jonction 48 est à proximité immédiate, voire au contact, du fil de trame d'extrémité 16.

La branche de jonction 48 participe donc elle aussi à la transmission au tronçon 10 des efforts exercés par le fil de trame d'extrémité 16' du tronçon semblable 10' sur la tête 33, ces efforts étant ainsi partagés entre la branche arrière 42 et la branche de jonction 48.

La tête 33 comporte en outre un doigt terminal 45 qui s'étend depuis l'extrémité inférieure de la rampe 37 jusqu'à l'extrémité avant 40 libre, ici suivant une direction parallèle à l'aile 14.

Dans la configuration encliquetée des tronçon 10 et 10', le doigt terminal 45 s'étend en regard du côté externe du fil de chaîne 11' qui précède le fil de rive 15' et participe donc, au niveau de chaque aile 14', au maintien du tronçon 10' suivant la direction transversale à l'aile 14' vers l'extérieur.

L'entretoise 41 s'étend depuis une extrémité arrière 49 se raccordant au bras supérieur 47 et une extrémité avant 50, opposée à l'extrémité arrière 49.

L'extrémité avant 50 est formée par l'autre extrémité libre de l'unique fil métallique formant ici la partie latérale 21.

L'entretoise 41 présente ici successivement, depuis son extrémité arrière 49 jusqu'à son extrémité avant 50, un première branche 51, une deuxième branche 52, une troisième branche 53, une quatrième branche 54 et une cinquième branche 55, ici chacune rectiligne.

Les première, deuxième et troisième branche 51, 52 et 53 sont agencée en un triangle s'étendant suivant un plan orienté transversalement au plan de l'aile 14, ici avec une légère inclinaison par rapport au plan transversal suivant lequel s'étend le fil de trame d'extrémité 16, laquelle inclinaison est dirigée vers le fil de trame d'extrémité 16 et vers l'extérieur du tronçon 10 (figure 6), cette inclinaison étant ici d'environ 5°.

On notera que dans la configuration encliquetée des tronçons 10 et 10', cette légère inclinaison de la partie en triangle de l'entretoise 41 fait que, de chaque côté du tronçon 10, l'entretoise 41 respective s'oppose à un déplacement du fil de trame d'extrémité 16' du tronçon 10' suivant la direction transversale vers l'intérieur.

La première branche 51 s'étend depuis l'extrémité arrière 49 vers l'intérieur du tronçon 10, en étant inclinée vers l'intérieur du tronçon 10 et vers le haut et s'étend transversalement au plan de l'aile 14.

La deuxième branche 52 s'étend depuis la première branche 51 vers le fond 13 en étant inclinée vers l'intérieur du tronçon 10 et vers le fond 13 et est entièrement située entre les deux ailes 14 du tronçon 10.

La troisième branche 53 s'étend depuis la deuxième branche 52 vers l'extrémité arrière 49 en étant inclinée vers l'intérieur du tronçon 10 et vers le fond 13 et s'étend transversalement au plan de l'aile 14.

On notera que dans la configuration encliquetée des tronçons 10 et 10', le fil de trame d'extrémité 16' vient en butée à la fois contre une zone de la première branche 51 et contre une zone de la troisième branche 53, et que ces zones sont à une certaine distance l'un de l'autre, ce qui permet une bonne répartition de l'effort exercé par le fil de trame 16' contre l'entretoise 41 suivant la direction longitudinale.

La quatrième branche 54 s'étend depuis la troisième branche 53 en étant inclinée vers l'intérieur du tronçon 10 et vers le fond 13 comme la troisième branche 53, et en étant en outre inclinée vers le fil de trame d'extrémité 16.

On notera que dans la configuration encliquetée des tronçons 10 et 10', la quatrième branche 54 participe au maintien du tronçon 10' suivant la direction transversale à l'aile 14 vers l'extérieur, puisque le fil de trame d'extrémité 16' vient en butée contre la quatrième branche 54.

La cinquième branche 55 s'étend depuis la quatrième branche 54 et à l'opposé du fil de trame d'extrémité 16, en étant orientée suivant la direction longitudinale. La cinquième branche 55 est pour sa majeure partie située longitudinalement au droit de la branche avant 44 du cavalier 38 et de la rampe 37.

Comme on le voit bien à la figure 5, l'espace entre la branche avant 44 et la rampe 37 est configuré pour accueillir la cinquième branche 55 lorsque la tête 33 se déplace vers l'extérieur au cours de l'assemblage des tronçons 10 et 10'.

La partie latérale 21 est en outre configurée pour que la portion de la tête 33 située à la jonction entre la rampe 37 et la branche avant 44 vienne en butée contre la cinquième branche 55 lorsque la tête 33 est écartée vers l'extérieur, en particulier lors de l'assemblage des tronçons 10 et 10' ; et en outre ici pour que la portion de la tête 33 située à la jonction entre la branche de jonction 48 et la branche arrière 42 vienne en butée contre le bras supérieur 47 (figure 6). Ceci permet d'éviter une déformation excessive du bras flexible 34 au point de ne plus être élastique.

On notera que l'effort exercé par la tête 33 sur la cinquième branche 55 est principalement absorbé par la déformation de l'entretoise 41 et ne produit pas, ou très peu, de modification de la position angulaire de l'aile 14 par rapport au fond 13.

On notera en outre que la partie latérale 21 peut être configurée pour qu'en l'absence de sollicitation (figures 1 à 4, 7 et 8), le bras flexible 34 soit précontraint et qu'ainsi le fond 43 du cavalier 38 exerce une force contre le fil de trame d'extrémité 16, ainsi que sur le fil de trame d'extrémité 16' dans la configuration encliquetée des tronçons 10 et 10'.

Pour désassembler les tronçons de chemin de câbles 10 et 10', on déforme chaque partie latérale 21 de sorte à écarter le cavalier 38 de sa position sous les fils de rive 15 et 15' par déformation du bras flexible 34, puis on éloigne les tronçons 10 et 10' l'un de l'autre suivant la direction 19 transversale au fond 13 du tronçon 10.

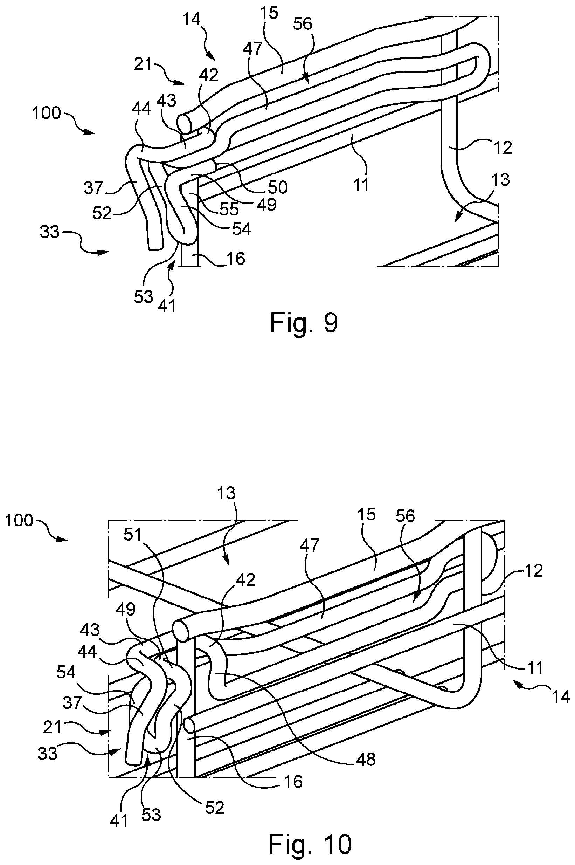

Le tronçon de chemin de câbles 100 illustré sur les figures 9 et 10 est identique au tronçon 10 sauf que ses parties latérales 21 sont agencées différemment.

La base en U de la partie latérale 21 est contre le côté interne du fil de trame d'extrémité 16 et du fil de trame 12 qui le précède, c'est-à-dire le côté qui regarde vers l'intérieur du tronçon de chemin de câbles 100.

La base en U présente en outre, entre le fil de trame d'extrémité 16 et le fil de trame 12 qui le précède, une portion 56 en débord vers l'extérieur du tronçon 100 qui se situe, suivant la direction transversale aux ailes 14, au même niveau que les fils de chaîne 11.

La branche de jonction 48 (figure 10) est située dans la portion en débord 56 et est orientée parallèlement au plan de l'aile 14.

Le fond 43 du cavalier 38 est situé du côté du fil de trame d'extrémité 16 qui regarde vers l'intérieur du tronçon 100.

La branche arrière 42 et la branche avant 44 s'étendent chacune depuis le fond 43 vers l'extérieur du tronçon 100.

La rampe 37 est ici inclinée vers l'extérieur du tronçon 100 et vers le haut, de sorte que la tête 33 se déplace vers l'intérieur du tronçon 100 au cours de l'assemblage du tronçon 100 avec un tronçon semblable (non représenté).

L'entretoise 41 présente ici successivement, depuis son extrémité 49 par laquelle elle se raccorde au bras supérieur 47 jusqu'à son extrémité opposée 50, une première branche 51, une deuxième branche 52, une troisième branche 53, une quatrième branche 54 et une cinquième branche 55, ici chacune rectiligne sauf la troisième branche 53 qui est coudée.

Les première, deuxième et troisième branches 51, 52 et 53 s'étendant suivant un plan orienté transversalement au plan de l'aile 14, ici perpendiculairement.

La première branche 51 et la deuxième branche 52 sont agencées en un V dont la pointe est dirigée vers l'extérieur du tronçon 100.

La première branche 51 s'étend depuis l'extrémité 49 vers l'extérieur du tronçon 100, parallèlement au fond 13 et transversalement au plan de l'aile 14.

La deuxième branche 52 s'étend depuis la première branche 51 vers l'intérieur du tronçon 100 en étant inclinée vers l'intérieur et vers le fond 13.

La troisième branche 53, qui est coudée, a sa concavité tournée vers la première branche 51 et s'étend transversalement au plan de l'aile 14.

On notera que dans la configuration encliquetée du tronçon 100 avec un tronçon semblable (non représenté), le fil de trame extrême de l'extrémité nominale de ce tronçon semblable vient en butée à la fois contre une zone de la première branche 51 et contre une zone de la troisième branche 53 coudée, et que ces zones sont à une certaine distance l'un de l'autre, ce qui permet une bonne répartition de l'effort exercé par ce fil de trame extrême contre l'entretoise 41 suivant la direction longitudinale.

La quatrième branche 54 s'étend depuis la troisième branche 53, parallèlement au plan de l'aile 14, en étant inclinée vers le fil de trame d'extrémité 16 et vers le fond 13.

La cinquième branche 55 est orientée suivant la direction longitudinale et s'étend depuis la quatrième branche 54 vers l'extrémité nominale 17 du tronçon 100.

La cinquième branche 55 est ici soudée au tronçon 100 à l'endroit où elle est contre le fil de trame d'extrémité 16.

On notera que dans la configuration encliquetée du tronçon 100 avec un tronçon semblable (non représenté), la quatrième branche 54 et la cinquième branche 55 participent au maintien du tronçon semblable suivant la direction transversale à l'aile 14 vers l'extérieur, puisque le fil de trame extrême de l'extrémité nominale de ce tronçon semblable vient en butée contre ces quatrième et cinquième branches 54 et 55.

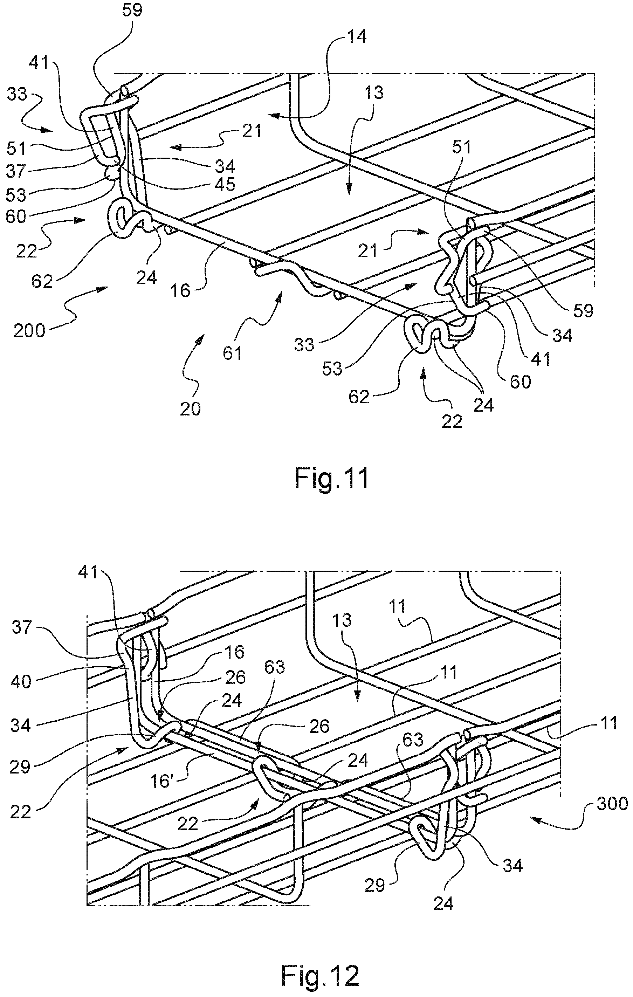

Le tronçon de chemin de câbles 200 illustré sur la figure 11 est identique au tronçon 10 sauf que l'éclissage est agencé différemment.

De chaque côté du tronçon 200, la tête 33, le bras flexible 34 et l'organe de butée 22 qui est au pied de l'aile 14 sont formés par un même premier fil métallique, et l'entretoise 41 est formée par un deuxième fil métallique distinct du premier fil métallique.

L'entretoise 41 présente une première branche 51 et une deuxième branche 53 agencées en un V dont la pointe est tournée vers l'intérieur du tronçon 200, ainsi qu'un doigt supérieur 59 et un doigt inférieur 60 qui s'étendent respectivement depuis l'extrémité de la première branche 51 opposée à la deuxième branche 53 et depuis l'extrémité de la deuxième branche 53 opposée à la première branche 51.

Le doigt supérieur 59 et le doigt inférieur 60 s'étendent chacun longitudinalement et sont chacun contre le côté externe du fil de trame d'extrémité 16, auquel ils sont chacun soudés.

La première branche 51 est inclinée vers l'intérieur du tronçon 200 et vers le fond 13, tandis que la deuxième branche 53 est inclinée vers l'extérieur du tronçon 200 et vers le fond 13.

La première branche 51 et la deuxième branche 53 s'étendent chacune transversalement au plan de l'aile 14.

On notera que dans la configuration encliquetée du tronçon 200 avec un tronçon semblable (non représenté), le fil de trame extrême de l'extrémité nominale de ce tronçon semblable vient en butée à la fois contre une zone de la première branche 51 et contre une zone de la deuxième branche 53, et que ces zones sont à une certaine distance l'un de l'autre, ce qui permet une bonne répartition de l'effort exercé par ce fil de trame extrême contre l'entretoise 41 suivant la direction longitudinale.

La tête 33 de la partie latérale 21 du tronçon 200 est similaire à celle de la partie latérale 21 du tronçon 100, sauf que le doigt terminal 45 est orienté longitudinalement et s'étend du côté de la rampe 37 où se trouve l'entretoise 41.

Le bras flexible 34 est orienté transversalement et se raccorde, par son extrémité proximale 36 opposée à la tête 33, à une des branches latérales 24 de l'organe de butée 22 de la partie de fond 20 qui est au pied de l'aile 14.

L'extrémité proximale 36 est ainsi fixée au fond 13, ici par l'intermédiaire d'une branche latérale 24.

Comme pour le tronçon 10, le bras flexible 34 du tronçon 200 est entièrement situé du côté du fil de trame d'extrémité 16 qui regarde vers l'extrémité nominale 17.

L'organe de butée 22 est similaire à celui du tronçon 10 sauf que ses branches latérales 24 se situent pour leur majeure partie au voisinage du fil de trame d'extrémité 16 et sont ici soudées exclusivement à ce fil 16 ; et que l'arche centrale 25 de l'arceau 23 est remplacée par un pontet 62.

La partie de fond 20 comporte en outre ici une entretoise 61, similaire à l'entretoise 41 de la partie latérale 21 sauf que sa première branche et sa deuxième branche s'étendent transversalement au plan du fond 13.

Le tronçon de chemin de câbles 300 illustré sur la figure 12 est identique au tronçon 200 sauf que l'éclissage est agencé différemment.

Le bras flexible 34 se raccorde à l'extrémité 40 de la tête 33 qui est située du côté de l'entretoise 41 qui regarde à l'opposé du fil de trame 16, c'est-à-dire ici l'extrémité inférieure de la rampe 37, alors que l'autre extrémité du bras flexible 34 se raccorde à la branche avant 29 de l'une des cornes 26.

Le bras flexible 34 est ici entièrement situé du côté de l'entretoise 41 qui regarde à l'opposé du fil de trame d'extrémité 16 et, en configuration encliquetée du tronçon 300 avec un tronçon semblable, est en outre entièrement situé du côté du fil de trame d'extrémité 16' qui regarde vers l'extrémité nominale de ce tronçon semblable.

Les organes de butée 22 sont similaires à ceux du tronçon 200 sauf que les cornes 26 sont raccordées entre-elles par l'intermédiaire de leurs branches latérales 24 dont les extrémités opposées aux cornes 26 sont reliées par un pontet 63.

Les branches latérales 24 sont ici incurvées à concavité tournée vers le haut.

Le pontet 63 est rectiligne orienté parallèlement au fond 13 et est contre le côté du fil de trame d'extrémité 16 qui regarde vers l'extrémité nominale 17, ainsi que contre le côté des fils de chaîne 11 qui regarde vers l'intérieur du tronçon 300. Le pontet 63 est soudé sur le fil de trame d'extrémité 16 et/ou aux endroits où il est contre les fils de chaîne 11.

La corne 26 de l'organe de butée 22 à laquelle se raccorde le bras flexible 34 est celle des cornes 26 qui est la plus proche de l'aile 14 ; et cette corne 26 est ici inclinée vers le haut et à l'opposé de cette aile 14.

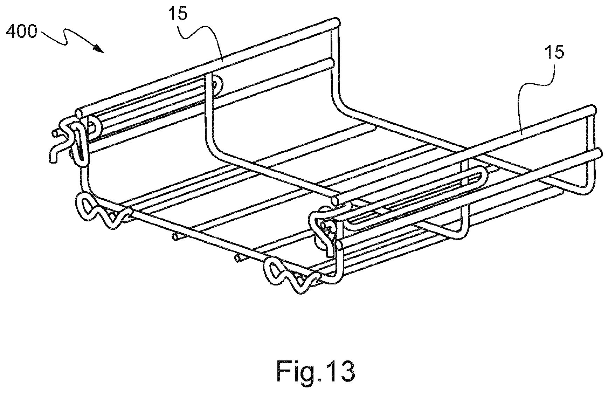

Le tronçon de chemin de câbles 400 illustré sur la figure 13 est identique au tronçon 10 sauf que les fils de rive 15 sont dépourvus de portions en renfoncement telles que 57 et sont rectilignes.

Dans des variantes non représentées :
- l'extrémité proximale du bras flexible ne se raccorde pas à la partie de fond et est assemblée au tronçon de chemin de câbles en étant directement fixée au fond de ce dernier ;
- le bras flexible est formé par le bras supérieur de la base en U plutôt que par son bras inférieur, la tête se raccordant ainsi au bras supérieur ; et/ou
- la partie de fond présente moins ou plus de deux organes de butée, par exemple un seul organe de butée, ou trois organes de butée, voire plus.

Plus généralement, l'invention ne se limite pas aux exemples décrits et représentés.

## Revendications

1. Tronçon de chemin de câbles en treillis de fils métalliques, comportant des fils de chaîne (11) longitudinaux soudés à des fils de trame (12) transversaux conformés en U, grâce à quoi ledit tronçon de chemin de câbles (10, 100, 200, 300, 400) présente un fond (13) et deux ailes (14), ledit tronçon de chemin de câbles se terminant à chaque extrémité par un fil de trame extrême (16), chaque aile (14) se terminant à son sommet par un fil de chaîne (11) extrême appelé fil de rive (15) ; ledit tronçon de chemin de câbles (10, 100, 200, 300, 400) présentant une extrémité nominale (17) et une extrémité éclissée (18) munie d'un éclissage en fils métalliques configuré pour permettre à ladite extrémité éclissée (18) de s'assembler par encliquetage avec l'extrémité nominale (17') d'un tronçon de chemin de câbles semblable (10') dans une configuration encliquetée où ledit tronçon de chemin de câbles (10, 100, 200, 300, 400) et ledit tronçon de chemin de câbles semblable (10') sont maintenus bout à bout, ledit encliquetage s'opérant par un mouvement de rapprochement mutuel de ladite extrémité éclissée (18) dudit tronçon (10, 100, 200, 300, 400) et de ladite extrémité nominale (17') dudit tronçon semblable (10') suivant une direction (19) transversale audit fond (13) dudit tronçon (10, 100, 200, 300, 400) et audit fond (13') dudit tronçon semblable (10'), avec au cours de ce mouvement de rapprochement ledit éclissage qui se déforme élastiquement au contact dudit tronçon semblable (10') puis se détend pour retenir ledit tronçon semblable (10') ; ledit éclissage comportant une partie de fond (20) et deux parties latérales (21) ; ladite partie de fond (20) comportant des organes de butée (22) configurés pour coopérer avec le fond (13') de l'extrémité nominale (17') dudit tronçon semblable (10') pour s'opposer à la poursuite dudit mouvement de rapprochement dudit tronçon semblable (10') lorsque ce dernier est bout à bout avec ledit tronçon (10, 100, 200, 300, 400) ; chaque dite partie latérale (21) comportant une tête (33) et un bras flexible (34) ayant une extrémité distale (35) raccordée à la tête (33) et ayant une extrémité proximale (36) assemblée audit tronçon (10, 100, 200, 300, 400), ladite tête (33) comportant une rampe (37) et un cavalier (38) raccordé à la rampe (37) ; chaque dite partie latérale (21) prenant en l'absence de sollicitation une configuration où le cavalier (38) est sous le fil de rive (15) dans une position propre à retenir l'un à l'autre le fil de trame extrême (16) de l'extrémité éclissée (18) dudit tronçon (10, 100, 200, 300, 400) et le fil de trame extrême (16') de l'extrémité nominale (17') dudit tronçon semblable (10') ; ledit tronçon étant **caractérisé en ce que** ladite tête (33) et ledit bras flexible (34) sont configurés pour qu'au cours dudit mouvement de rapprochement le fil de rive (15') de l'extrémité nominale (17') dudit tronçon semblable (10') rencontre la rampe (37) et l'entraîne à écarter le cavalier (38) de sa position sous le fil de rive (15) dudit tronçon par déformation dudit bras flexible (34), jusqu'à ce que le fil de rive (15') de l'extrémité nominale (17') dudit tronçon semblable (10') ait franchi ladite rampe (37), le bras flexible (34) se détendant alors en ramenant le cavalier (38) à sa position sous le fil de rive (15) dudit tronçon ;
et **en ce que** ladite tête (33) est raccordée audit bras flexible (34) par l'une de ses extrémités (39 ; 40) ; et chaque dite partie latérale (21) comporte en outre de ladite tête (33) et dudit bras flexible (34), une entretoise (41) assujettie audit fil de trame extrême (16) de ladite extrémité éclissée (18) dudit tronçon (10, 100, 200, 300, 400), ladite entretoise (41) étant située, dans ladite configuration encliquetée, entre ledit fil de trame extrême (16) de l'extrémité éclissée (18) dudit tronçon (10, 100, 200, 300, 400) et ledit fil de trame extrême (16') de l'extrémité nominale (17') dudit tronçon semblable (10').

2. Tronçon de chemin de câbles selon la revendication 1, **caractérisé en ce que** ladite extrémité (39) de ladite tête (33) par laquelle ladite tête (33) se raccorde audit bras flexible (34) est située entre le fil de trame extrême (16) de ladite extrémité éclissée (18) dudit tronçon (10, 100, 200, 300, 400) et le fil de trame (12) qui le précède.

3. Tronçon de chemin de câbles selon la revendication 1, **caractérisé en ce que**, dans ladite configuration encliquetée, ladite extrémité (40) de ladite tête (33) par laquelle ladite tête (33) se raccorde audit bras flexible (34) est située entre le fil de trame extrême (16') de ladite extrémité nominale (17') dudit tronçon semblable (10') et le fil de trame (12') qui le précède.

4. Tronçon de chemin de câbles selon l'une quelconque des revendications 1 à 3, **caractérisé en ce que** ladite extrémité proximale (36) dudit bras flexible (34) est fixée à l'aile (14) dudit tronçon (10, 100, 200, 300, 400) avec laquelle coopère ladite tête (33).

5. Tronçon de chemin de câbles selon la revendication 4, **caractérisé en ce que** ledit bras flexible (34) s'étend longitudinalement entre deux fils de chaîne (11,15) de ladite aile (14) dudit tronçon (10, 100, 200, 300, 400).

6. Tronçon de chemin de câbles selon l'un des revendications 1 à 3, **caractérisé en ce que** ladite extrémité proximale (36) dudit bras flexible (34) est fixée au fond (13) dudit tronçon (10).

7. Tronçon de chemin de câbles selon la revendication 6, **caractérisé en ce que** ladite extrémité proximale (36) dudit bras flexible (34) se raccorde à l'un desdits organes de butée (22).

8. Tronçon de chemin de câbles selon l'une quelconque des revendications 1 à 7, **caractérisé en ce que** ladite extrémité distale (35) dudit bras flexible (34) se raccorde à ladite rampe (37).

9. Tronçon de chemin de câbles selon l'une quelconque des revendications 1 à 8, **caractérisé en ce que** ladite entretoise (41) présente au moins deux branches (51, 53) s'étendant chacune transversalement au plan de l'aile (14) dudit tronçon (10) avec laquelle coopère ladite tête (33).

10. Tronçon de chemin de câbles selon l'une quelconque des revendications 1 à 9, **caractérisé en ce que** chaque partie latérale (21) est formée par un unique fil métallique.

11. Tronçon de chemin de câbles selon la revendication 10, **caractérisé en ce que** ladite partie latérale (21) comporte une base en U présentant un fond (46) et deux bras (34, 47) s'étendant chacun depuis une extrémité respective dudit fond (46), l'un desdits bras formant ledit bras flexible (34), l'autre desdits bras (47) se raccordant à ladite entretoise (41).

12. Tronçon selon la revendication 11, **caractérisé en ce que** ladite base en U est contre le côté desdits fils de trame (12, 16) qui regarde vers l'extérieur dudit tronçon (10, 100, 200, 300, 400).

13. Tronçon de chemin de câbles selon l'une quelconque des revendications 1 à 9, **caractérisé en ce que** ladite tête (33) et ledit bras flexible (34) sont formés par un premier desdits fils métalliques et ladite entretoise (41) est formée par un deuxième desdits fils métalliques distinct dudit premier fil métallique.

14. Ensemble comportant un tronçon de chemin de câbles selon l'une quelconque des revendications 1 à 13 et un tronçon de chemin de câbles semblable.

## Patentansprüche

1. Kabeltrassenabschnitt aus Metalldrahtgeflecht, der längs verschweißte Kettdrähte (11) mit U-förmigen Querschussdrähten (12) aufweist, wodurch der Kabeltrassenabschnitt (10, 100, 200, 300, 400) einen Boden (13) und zwei Flügel (14) besitzt, wobei der Kabeltrassenabschnitt an jedem Ende mit einem äußersten Schussdraht (16) endet, wobei jeder Flügel (14) an seiner Spitze mit einem äußersten Kettdraht (11) endet, der als Randdraht (15) bezeichnet wird; wobei der Kabeltrassenabschnitt (10, 100, 200, 300, 400) ein Nennende (17) und ein gespleißtes Ende (18) besitzt, das mit einer Spleißung aus Metalldrähten ausgestattet ist, die so konfiguriert ist, dass das gespleißte Ende (18) durch Verrasten mit dem Nennende (17') eines gleichartigen Kabeltrassenabschnitts (10') in einer eingerasteten Konfiguration verbunden werden kann, in der der Kabeltrassenabschnitt (10, 100, 200, 300, 400) und der gleichartige Kabeltrassenabschnitt (10') an ihren Enden aneinander gehalten werden, wobei die Verrastung durch eine gegenseitige Annäherungsbewegung des gespleißten Endes (18) des Abschnitts (10, 100, 200, 300, 400) und des Nennendes (17') des gleichartigen Abschnitts (10') entlang einer Richtung (19) quer zu dem Boden (13) des Abschnitts (10, 100, 200, 300, 400) und dem Boden (13') des gleichartigen Abschnitts (10') erfolgt, wobei sich während dieser Annäherungsbewegung die Spleißung bei dem Kontakt mit dem gleichartigen Abschnitt (10') elastisch verformt und sich dann entspannt, um den gleichartigen Abschnitt (10') zu halten; wobei die Spleißung einen Bodenteil (20) und zwei Seitenteile (21) aufweist; wobei der Bodenabschnitt (20) Anschlagelemente (22) aufweist, die so konfiguriert sind, dass sie mit dem Boden (13') des Nennendes (17') des gleichartigen Abschnitts (10') zusammenarbeiten, um der Fortsetzung der Annäherungsbewegung des gleichartigen Abschnitts (10') entgegenzuwirken, wenn dieser mit dem gleichartigen Abschnitt (10, 100, 200, 300, 400) stumpf anstößt; wobei jedes Seitenteil (21) einen Kopf (33) und einen flexiblen Arm (34) mit einem distalen Ende (35), das mit dem Kopf (33) verbunden ist, und einem proximalen Ende (36), das an diesem Abschnitt (10, 100, 200, 300, 400) montiert ist, aufweist, wobei der Kopf (33) eine Rampe (37) und einen mit der Rampe (37) verbundenen Brückendraht (38) aufweist; wobei jedes Seitenteil (21) ohne Beanspruchung eine Konfiguration annimmt, bei der sich der Brückendraht (38) unter dem Randdraht (15) in einer Position befindet, die geeignet ist, um den äußersten Schussdraht (16) des gespleißten Endes (18) des Abschnitts (10, 100, 200, 300, 400) und den äußersten Schussdraht (16') des Nennendes (17') des gleichartigen Abschnitts (10') aneinander zu halten; wobei der Abschnitt **dadurch gekennzeichnet ist, dass** der Kopf (33) und der flexible Arm (34) so konfiguriert sind, dass der Randdraht (15') des Nennendes (17') des gleichartigen Abschnitts (10') während der Annäherungsbewegung auf die Rampe (37) trifft und ihn dazu bringt, den Brückendraht (38) durch Verformung des flexiblen Arms (34) von seiner Position unter dem Randdraht (15) des gleichartigen Abschnitts wegzubewegen, bis der Randdraht (15') des Nennendes (17') des gleichartigen Abschnitts (10') die Rampe (37) durchlaufen hat, wobei sich der flexible Arm (34) dann entspannt, indem er den Brückendraht (38) in ihre Position unter dem Randdraht (15) des Abschnitts zurückführt;
und dass der Kopf (33) mit einem seiner Enden (39; 40) mit dem flexiblen Arm (34) verbunden ist; und jeder der Seitenteile (21) zusätzlich zu dem Kopf (33) und dem flexiblen Arm (34) einen Abstandshalter (41) aufweist, der an dem äußersten Schussdraht (16) des gespleißten Endes (18) des Abschnitts (10, 100, 200, 300, 400) befestigt ist, wobei sich der Abstandshalter (41) in der eingerasteten Konfiguration zwischen dem äußersten Schussdraht (16) des gespleißten Endes (18) des Abschnitts (10, 100, 200, 300, 400) und dem äußersten Schussdraht (16') des Nennendes (17') des gleichartigen Abschnitts (10') befindet.

2. Kabeltrassenabschnitt nach Anspruch 1, **dadurch gekennzeichnet, dass** sich das Ende (39) des Kopfes (33), durch das der Kopf (33) an diesen flexiblen Arm (34) angeschlossen ist, zwischen dem äußersten Schussdraht (16) des gespleißten Endes (18) des Abschnitts (10, 100, 200, 300, 400) und dem ihm vorausgehenden Schussdraht (12) befindet.

3. Kabeltrassenabschnitt nach Anspruch 1, **dadurch gekennzeichnet, dass** sich in der eingerasteten Konfiguration das Ende (40) des Kopfes (33), durch das der Kopf (33) an den flexiblen Arm (34) angeschlossen ist, zwischen dem äußersten Schussdraht (16') des Nennendes (17') des gleichartigen Abschnitts (10') und dem ihm vorausgehenden Schussdraht (12') befindet.

4. Kabeltrassenabschnitt nach einem der Ansprüche 1 bis 3, **dadurch gekennzeichnet, dass** das proximale Ende (36) des flexiblen Arms (34) am Flügel (14) des Abschnitts (10, 100, 200, 300, 400) befestigt ist, mit dem der Kopf (33) zusammenarbeitet.

5. Kabeltrassenabschnitt nach Anspruch 4, **dadurch gekennzeichnet, dass** sich der flexible Arm (34) längs zwischen zwei Kettdrähten (11,15) des Flügels (14) des Abschnitts (10, 100, 200, 300, 400) erstreckt.

6. Kabeltrassenabschnitt nach einem der Ansprüche 1 bis 3, **dadurch gekennzeichnet, dass** das proximale Ende (36) des flexiblen Arms (34) am Boden (13) des Abschnitts (10) befestigt ist.

7. Kabeltrassenabschnitt nach Anspruch 6, **dadurch gekennzeichnet, dass** das proximale Ende (36) des flexiblen Arms (34) mit einem der Anschlagelemente (22) verbunden ist.

8. Kabeltrassenabschnitt nach einem der Ansprüche 1 bis 7, **dadurch gekennzeichnet, dass** das distale Ende (35) des flexiblen Arms (34) mit der Rampe (37) verbunden ist.

9. Kabeltrassenabschnitt nach einem der Ansprüche 1 bis 8, **dadurch gekennzeichnet, dass** der Abstandshalter (41) mindestens zwei Zweige (51, 53) besitzt, die sich jeweils quer zu der Ebene des Flügels (14) des Abschnitts (10) erstrecken, mit dem der Kopf (33) zusammenarbeitet.

10. Kabeltrassenabschnitt nach einem der Ansprüche 1 bis 9, **dadurch gekennzeichnet, dass** jedes Seitenteil (21) aus einem einzigen Metalldraht gebildet ist.

11. Kabeltrassenabschnitt nach Anspruch 10, **dadurch gekennzeichnet, dass** der Seitenteil (21) eine U-förmige Basis aufweist, die einen Boden (46) und zwei Arme (34, 47) besitzt, die sich jeweils von einem jeweiligen Ende des Bodens (46) aus erstrecken, wobei einer der Arme den flexiblen Arm (34) bildet, wobei der andere der Arme (47) sich mit dem Abstandshalter (41) verbindet.

12. Abschnitt nach Anspruch 11, **dadurch gekennzeichnet, dass** die U-förmige Basis gegen die Seite der Rasterdrähte (12, 16) steht, die nach außen zu dem Abschnitt (10, 100, 200, 300, 400) zeigt.

13. Kabelabschnitt nach einem der Ansprüche 1 bis 9, **dadurch gekennzeichnet, dass** der Kopf (33) und der flexible Arm (34) durch einen der ersten Metalldrähte gebildet sind und der Abstandshalter (41) durch einen zweiten der Metalldrähte gebildet ist, der von dem ersten Metalldraht getrennt ist.

14. Baugruppe, die einen Kabeltrassenabschnitt nach einem der Ansprüche 1 bis 13 und einen gleichartigen Kabeltrassenabschnitt aufweist.

## Claims

1. Length of cable raceway of metal wire trellis, comprising longitudinal warp wires (11) welded to U-shaped transverse weft wires (12), whereby said length of cable raceway (10, 100, 200, 300, 400) has a bottom (13) and two side walls (14), said length of cable raceway terminating at each end with a farthermost weft wire (16), each side wall (14) ending at its apex with a farthermost warp wire (11) called edging wire (15); said length of cable raceway (10, 100, 200, 300, 400) having a nominal end (17) and a splice end (18) provided with metal wire splicing configured to enable said splice end (18) to be assembled by snap engagement with the nominal end (17') of a similar length of cable raceway (10') in a snap-engaged configuration in which said length of cable raceway (10, 100, 200, 300, 400) and said similar length of cable raceway (10') are held end-to-end, said snap engagement taking place by a movement of bringing together said splice end (18) of said length (10, 100, 200, 300, 400) and said nominal end (17') of said similar length (10') in a direction (19) transverse to said bottom (13) of said length (10, 100, 200, 300, 400) and to said bottom (13') of said similar length (10'), said splicing, in course of this movement of bringing together, elastically deforming in contact with said similar length (10') then relaxing to retain said similar length (10'); said splicing comprising a bottom part (20) and two lateral parts (21); said bottom part (20) comprising stop members (22) configured to cooperate with the bottom (13') of the nominal end (17') of said similar length (10') to oppose the continuation of said movement of bringing together for said similar length (10') when the latter is end-to-end with said length (10, 100, 200, 300, 400); each said lateral part (21) comprising a head (33) and a flexible arm (34) having a distal end (35) connected to the head (33) and having a proximal end (36) assembled to said length (10, 100, 200, 300, 400), said head (33) comprising a ramp portion (37) and a rider (38) connected to the ramp portion (37); in an unbiased condition each said lateral part (21) taking a configuration in which the rider (38) is under the edging wire (15) in a position suitable for retaining together the farthermost weft wire (16) of the splice end (18) of said length (10, 100, 200, 300, 400) and the farthermost weft wire (16') of the nominal end (17') of said similar length (10'); said length of cable raceway being **characterized in that** said head (33) and said flexible arm (34) are configured such that in the course of said movement of bringing together, the edging wire (15') of the nominal end (17') of said similar length (10') encounters the ramp portion (37) and drives it to move the rider (38) away from its position under the edging wire (15) of said length of cable raceway by deformation of said flexible arm (34), until the edging wire (15') of the nominal end (17') of said similar length (10') has passed beyond said ramp portion (37), the flexible arm (34) then relaxing while returning the rider (38) to its position under the edging wire (15) of cable raceway;
and **in that** said head (33) is connected to said flexible arm (34) by one of its ends (39; 40); and each said lateral part (21) comprises in addition to said head (33) and said flexible arm (34), a spacer (41) mechanically connected to said farthermost weft wire (16) of said splice end (18) of said length (10, 100, 200, 300, 400), said spacer (41) being located, in said snap-engaged configuration, between said farthermost weft wire (16) of said splice end (18) of said length (10, 100, 200, 300, 400) and said farthermost weft wire (16') of the nominal end (17') of said similar length (10').

2. Length of cable raceway according to claim 1, **characterized in that** said end (39) of said head (33) by which said head (33) connects to said flexible arm (34) is located between the farthermost weft wire (16) of said splice end (18) of said length (10, 100, 200, 300, 400) and the weft wire (12) preceding it.

3. Length of cable raceway according to claim 1, **characterized in that** in said snap-engaged configuration, said end (40) of said head (33) by which said head (33) connects to said flexible arm (34) is located between the farthermost weft wire (16') of said nominal end (17') of said similar length (10') and the weft wire (12') preceding it.

4. Length of cable raceway according to any one of claims 1 to 3, **characterized in that** said proximal end (36) of said flexible arm (34) is fastened to the side wall (14) of said length (10, 100, 200, 300, 400) with which cooperates said head (33).

5. Length of cable raceway according to claim 4, **characterized in that** said flexible arm (34) extends longitudinally between two warp wires (11,15) of said side wall (14) of said length (10, 100, 200, 300, 400).

6. Length of cable raceway according to one of claims 1 to 3, **characterized in that** said proximal end (36) of said flexible arm (34) is fastened on the bottom (13) of said length (10).

7. Length of cable raceway according to claim 6, **characterized in that** said proximal end (36) of said flexible arm (34) connects to one of said stop members (22).

8. Length of cable raceway according to any one of claims 1 to 7, **characterized in that** said distal end (35) of said flexible arm (34) connects to said ramp portion (37).

9. Length of cable raceway according to any one of claims 1 to 8, **characterized in that** said spacer (41) has at least two branches (51, 53) each extending transversely to the plane of the side wall (14) of said length (10) with which said head (33) cooperates.

10. Length of cable raceway according to any one of claims 1 to 9, **characterized in that** each lateral part (21) is formed by a single metal wire.

11. Length of cable raceway according to claim 10, **characterized in that** said lateral part (21) comprises a U-shaped base having a bottom (46) and two arms (34, 47) each extending from a respective end of said bottom (46), one of said arms forming said flexible arm (34), the other of said arms (47) connecting to said spacer (41).

12. Length according to claim 11, **characterized in that** said U-shaped base is against the side of said weft wires (12, 16) that faces towards the outside of said length (10, 100, 200, 300, 400).

13. Length of cable raceway according to any one of claims 1 to 9, **characterized in that** said head (33) and said flexible arm (34) are formed by a first of said metal wires and said spacer (41) is formed by a second of said metal wires that is distinct from said first metal wire.

14. Assembly comprising a length of cable raceway according to any one of claims 1 to 13 and a similar length of cable raceway.
